# EUROPEAN PATENT APPLICATION

(11) **EP 1 892 809 A1**
(43) Date of publication of application: **27.02.2008**
(21) Application number: 06425593.8
(22) Date of filing: 21.08.2006
(51) Int. Cl.: H02G 3/06, H02G 3/04, H02G 3/08

(54) **Configurable bend or junction accessory for cable conduits**

(71) Applicant: Legrand S.p.A., 20080 Zibido San Giacomo MI (IT)
(72) Inventor: Garassino, Luca, 15067 Novi Ligure (Alessandria) (IT); Marengo, Massimo, 15011 Acqui Terme (Alessandria) (IT)
(74) Representative: Deambrogi, Edgardo

(57) **Abstract**

What is described is a bend or junction accessory for cable conduits, having a boxlike body, characterized in that it comprises: (i) a supporting structure (10) common to a plurality of possible accessory configurations; and (ii) a plurality of removable wall configuration elements (12) adapted to be assembled to the common supporting structure (10), and selectable according to the intended use of the accessory.

A kit for this accessory comprises:
a first bottom base assembly (22) and a plurality of lateral supporting sections (20) adapted to be associated in advance with the said base assembly (22) to form a supporting structure (10) of the accessory,
- a plurality of removable wall configuration elements (12), adapted to be selected according to the intended use of the accessory, and adapted to be assembled to the supporting structure (10) by guided coupling to the lateral supporting sections (20), these elements including lateral wall panels (30-36) and base wall panels (24, 40), the aforesaid panels including blank panels (30, 32, 24, 40) and panels with apertures (34, 36); and
- a second top base assembly, adapted to be associated with the lateral support sections (20) at the end opposite the first bottom base assembly (22).

## Description

The present invention relates to cable carrying systems for industrial electrical conduits, and in particular to bend and junction accessories to be placed between straight elements of a cable carrying system.

A cable carrying system generally comprises straight elements in the form of channels or trays, such as closed or perforated channels or trays, or mesh or ladder trays, joined together by (two-way) bend accessories to provide a change of direction in the path of a conduit, or by (three- or four-way) junction accessories between separate conduit paths.

The typical set of accessories of a cable carrying system comprises bend accessories for forming bends which may be flat, upward, downward, S-shaped, with changes of plane (known as skewed bends), and junction accessories such as T-junctions (flat, upward or downward, with changes of plane), intersections (flat or vertical, possibly with changes of plane or skewed), and elements for reducing the cross section of the channel.

Since each accessory is intended solely for the use for which it is designed, the installer of complex conduits, whose topology is difficult to predict, will be obliged to acquire in advance a certain number of each type of accessory for each type of bend or junction that may be necessary, with evident disadvantages in terms of costs and space requirements in the transport of the system components, without any chance of avoiding longer installation times should an accessory which was not originally specified eventually be needed, but is subsequently found to be essential.

To overcome, at least partially, the disadvantages of the increased space requirements caused by the provision in advance of a certain number of accessories for each type, it is possible to supply these accessories broken down into their components. This is not always advantageous, since each accessory has its own distinctive components and its assembling on the installation site requires additional time and experience on the part of the installer, who is expected to correctly recognise of the parts to be assembled.

The object of the present invention is to provide a solution to the problems described above, by providing a set of bend and junction accessories for a cable carrying system which can enable electrical conduits to be installed rapidly, and without additional costs, in a topology which is determined "on site", at the time of installation, or which enables an existing conduit to be adapted to form a new topology.

According to the present invention, this object is achieved by means of a bend or junction accessory for cable conduits having the characteristics claimed in Claim 1.

Specific embodiments are described in the dependent claims.

A further object of the invention is a kit for a bend or junction accessory for cable conduits, as claimed.

Briefly, the present invention is based on the principle of providing a modular bend or junction accessory having a universal supporting structure, possibly produced in multiple classes of dimensions (width, height), which can potentially take on the configuration of any possible bend or junction accessory of a cable carrying system by the simple attachment of small removable, or interchangeable, configuration elements, to be selected according to the application of the accessory, to the supporting structure.

Overall, the accessory takes the form of a boxlike body. The universal supporting structure is preferably pre-formed and includes supporting sections or angle upright elements acting as lateral edges, interconnected by means of at least one base assembly, including base sides or a whole base plane. The configuration elements include panels forming (some of) the walls between (at least) the said lateral edges.

A panel kit is available, including base wall panels and side wall panels.

The base walls comprise a bottom wall and a top, and, in a preferred embodiment, they are not configurable but are formed by blank panels that can be joined to the supporting sections by removable fastenings, such as screws and the like.

The minimal supporting structure results from the coupling of a base plane to four supporting sections in the form of angle uprights, and allows an installer to operate freely in the internal space of the accessory, from the free base section and laterally, for laying the cables, enabling the structure to be handled safely without the risk of breaking apart.

The side walls comprise removable and interchangeable panels, in the form of blank panels and panels provided with apertures whose dimensions match the conduit cross section of the cable carrying system, preferably in the number of one or two apertures per panel, positioned along the orthogonal directions of the sides of the wall.

The removable panels are adapted to be coupled to the supporting sections by inserting them into corresponding guide formations, and retained in position to prevent accidental removal, by means of quick-fit retaining devices, such as elastically deformable clips acting by interference.

The panels with apertures have orthogonal joining tabs on a pair of opposite sides of each aperture (preferably on the shorter sides in the most frequent case of a rectangular aperture), for enabling coupling to a straight cable conduit or tray element.

Clearly, it is possible to provide different supporting structure configurations, i.e. supporting structures which also include non-configurable side walls, or supporting structures adapted to receive also configuration elements for one or both base walls. The latters result from the coupling of a base frame (bottom or top) to the four supporting sections in the form of angle uprights, in which the base frame is in turn formed by supporting sections which are transverse with respect to the said angle uprights.

Depending on the selection and positioning of the wall panels, it is possible to create an accessory having access points whose number and location are configurable, preferably configurable on the four side faces, but if necessary on all six faces of the geometrical solid.

Advantageously, the provision of a single universal supporting structure for accessories, which can be produced in a plurality of classes of dimensions (width, height), makes it possible to reduce drastically the number of components for the assembly of different types of accessory (differing for different types of bend or junction), thereby reducing the storage costs.

Further characteristics and advantages of the invention will be disclosed more fully in the following detailed description, provided by way of non-limiting example, with reference to the attached drawings, in which:
Figure 1 is a perspective view of a universal supporting structure of a modular accessory according to the invention and of corresponding configuration elements;
Figures 2a, 2b, 2c and 2d are perspective views of four variant embodiments of configuration elements for an accessory according to the invention, which can be coupled to a universal supporting structure;
Figures 3a and 3b are, respectively, a perspective view and a plan view of a supporting section of the universal supporting structure;
Figure 4 is a perspective view of a device for retaining the configuration elements of Figures 2a-2d;
Figure 5 is a perspective view of an assembled accessory, configured to form a bend accessory with an upward/downward change of plane;
Figures 6a and 6b are perspective views, taken in opposite directions, of a configured accessory, joined to straight elements of a cable conduit to form a downward skewed bend;
Figure 7 is an exploded perspective view of a modular accessory according to the invention with configuration elements in an alternative embodiment, which is configured to form a flat bend accessory;
Figure 8 is an exploded perspective view of a modular accessory according to the invention with configuration elements in a further alternative embodiment, which is configured to form a flat bend accessory;
Figures 9a-9e are views of a variant embodiment of a modular accessory according to the invention, in which there are two configurable walls;
Figures 10a, 10b and 10c are perspective views of a bend accessory of the upward, downward and flat type respectively, which can be assembled as shown in Figures 9a-9e; and
Figures 11a-11d are views of a junction and bend portion of a cable conduit that can be formed by using accessories according to the invention.

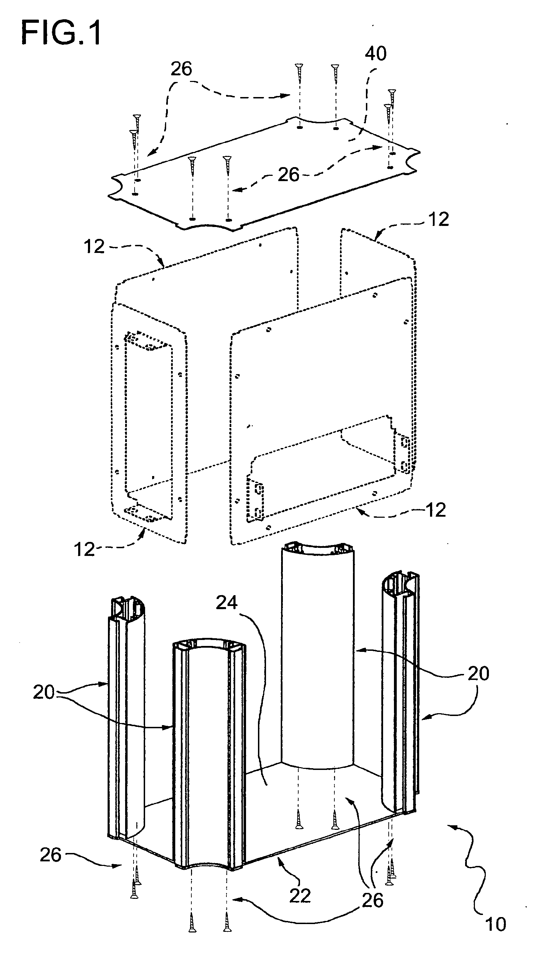

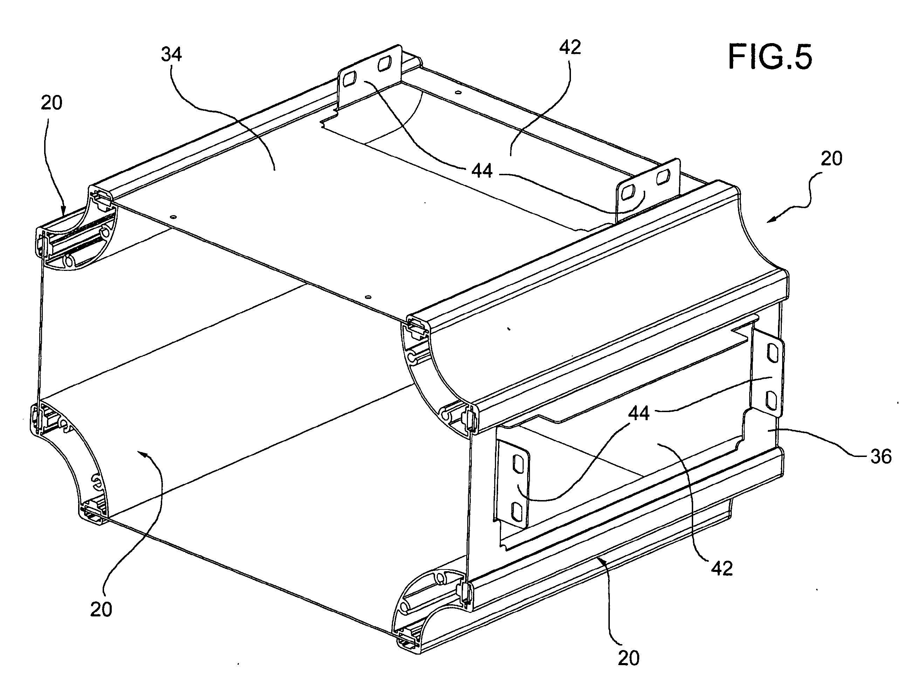

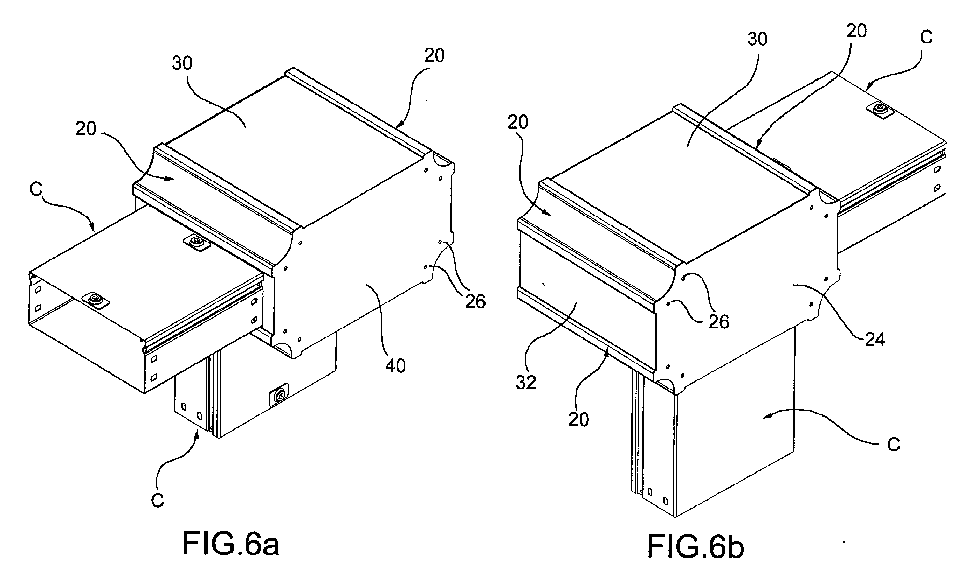

A configurable bend or junction accessory according to the invention, in a currently preferred embodiment, is shown in the figures attached to the present description, in the form of its components in Figures 1-4 and in the assembled state in Figures 5 and 6.

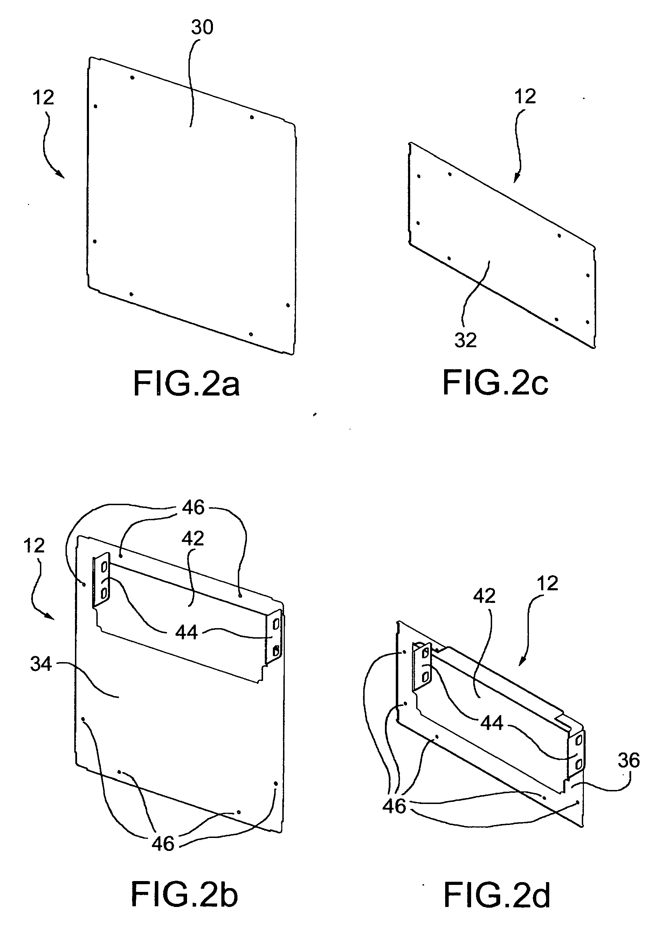

It comprises a universal supporting structure 10, shown in Figure 1, possibly produced in a plurality of classes of dimensions (width, height) for use with different series of cable carrying systems, and a plurality of replaceable configuration elements 12, of which some currently provided types are shown in Figures 2a-2d by way of example and without restrictive intent.

The universal supporting structure 10 includes perimetric supporting sections 20 in the form of angle uprights, interconnected by a base assembly 22 which, in the embodiment shown in the figure, comprises a bottom base plane 24, consisting of a blank panel joined stably to the said sections by means of screws 26 or similar fastenings.

The configuration elements 12 include blank panels 30, 32 and panels with apertures 34, 36, which can be coupled to the supporting sections 20 of the supporting structure to form the walls of the bend or junction accessory.

In a preferred embodiment, the panels 30-36 form walls of the accessory orthogonal to the bottom base plane, these walls being referred to hereafter as "side walls". A top (top base plane) 40 (shown in broken lines in Figure 1) is designed to be placed parallel to the bottom base plane and on the opposite end of the supporting sections from it, this top also being non-configurable in the illustrated embodiment and consisting, in the same way as the bottom base plane 24, of a blank panel that can be joined stably to the supporting sections 20 by means of screws 26, elastically deformable snap-fitting clips or brackets, or similar fastenings.

Each of the blank panels 30, 32 has a perimetric profile shaped so as to close the gap between two adjacent supporting sections 20, lying flush with the base plane 24 and the top 40 in the assembled state of the accessory.

Each of the panels with apertures 34, 36 also has a perimetric profile shaped so as to close the gap between two adjacent supporting sections 20, except as regards the central aperture 42 formed in its surface, and lies flush with the base plane 24 and the top 40 in the assembled state of the accessory.

The panels 34, 36 are provided with apertures 42 of generally rectangular shape and dimensions matching those of the conduit cross section of the cable carrying system for which the accessory is intended, in the number of one or two apertures per panel and positioned with their sides preferably running in directions parallel to the sides of the panel.

They have orthogonal joining tabs 44 on the opposing short sides of the apertures 42, for coupling to a straight cable conduit or tray or to a reduction element, possibly using adapters such as plate adapters.

Clearly, the variants illustrated are not exhaustive as regards the possible shapes of the panels, but are shown purely for information, any other positions and dimensions of the apertures being possible without departure from the principle of the invention.

For example, it is possible to provide apertures divided by partitions to separate the cables, for coupling with cable conduits provided with separating elements for arranging the cables in separate compartments.

It would also be possible to provide panels provided with apertures positioned in oblique directions, diagonally for example, to form bends and junctions with changes of plane in which the planes are rotated by angle other than 90°, which may be necessary in the case of cable conduits fitted on inclined walls.

Each panel 30-36 is also provided with perimetric centring/locking projections 46 in the form of pins, dowels or bosses on at least one of its faces, for example the outer face, i.e. that facing the outside of the accessory in the assembled state, the purpose of these devices being explained below in this description.

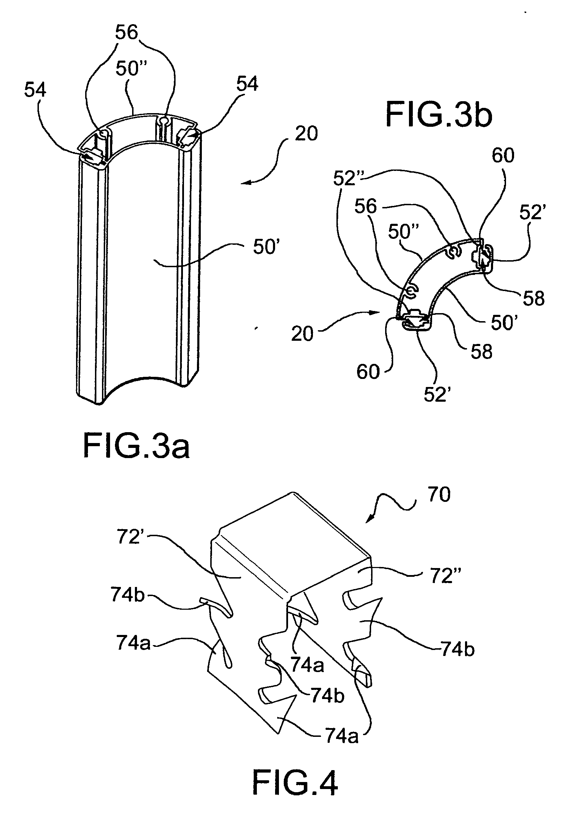

Figures 3a and 3b show a supporting section 20 in a perspective view and in cross section respectively.

In the currently preferred embodiment, the supporting sections 20 are made arcuate about their longitudinal axes, and are positioned in the supporting structure with the convexity facing the inside of the accessory, to lead the cables in their curved path without risk of damage.

Each supporting structure is made in the form of a hollow structure resembling a sector of a cylindrical ring with a central angle of 90°, and has a generally C-shaped cross section. It comprises a first inner longitudinal wall 50' and a second outer longitudinal wall 50", the attributes "inner" and "outer" referring to the positions of the walls with respect to the centre of curvature. Both walls 50', 50" along their longitudinal edge have pairs of flanges (52' and 52", respectively) bent at a right angle on a meridian plane outwards and inwards respectively from the walls, and are joined together in an interlocking arrangement, the flanges of the outer wall being fitted between the flanges of the inner wall, the flanges of corresponding edges being positioned facing each other so as to form a longitudinal guide formation 54 between them, this formation being shaped as a channel open at the said outer wall 50" along a meridian slit line.

Seats 56 for the fastening screws of a base plane and/or a top, extending as tubular formations in the longitudinal direction along the whole length of the section and therefore also acting as stiffening ribs of the structure, are formed integrally with one wall (the outer wall 50" in the illustrated embodiment).

The longitudinal guide formations 54 are adapted to receive, in a removable way, an edge of a panel 30-36 for forming, in the assembled state, a wall of the bend or junction accessory.

Each guide formation 54 comprises a shaped longitudinal seat 58, in which is formed a longitudinal recess 60 (or a plurality of recesses aligned in the longitudinal direction) for receiving, in the assembled state, the centring/locking projections 46 formed on the panels 30-36.

The supporting sections are made from plastics material by injection moulding or extrusion, or from metallic material, for example extruded aluminium or pressed or rolled steel.

If necessary, gaskets (not shown) can be interposed in the seats 58 to ensure the tightness of the configured accessory with respect to the outside environment, at the points of interruption of the continuity between the parts forming the lateral surface of the accessory.

The panels 30-36 are prevented from sliding in the seats 58 of the guide channels by means of quick-fit retaining devices 70 such as clips or the like, an example of embodiment of which is shown in Figure 4, which can be inserted at one end of the guide channel 54 and positioned astride the upper edge of the panel housed in the seat 58.

The retaining device 70 is preferably made in the form of a bracket, by punching a metal sheet and bending it into a U-shape, and has a pair of opposing walls 72', 72" provided with interference means for engaging respectively with both faces of the panel and with the opposing walls of the guide channel 54. The interference means comprise a plurality of points or spikes formed by flat punching and bending of flaps of the walls 72', 72" of the device, namely spikes 74a facing the inside of the body of the bracket for penetrating the surfaces of the panel, and spikes 74b facing the outside of the body of the bracket for penetrating the inner surfaces of the guide channel.

The selection of the configuration elements 12 and their fitting to the supporting structure 10 according to the planned topology of the cable conduit gives the accessory its desired configuration as a bend or junction accessory.

Examples of possible configurations are: flat bends, upward bends, downward bends, S-bends, right- or left-hand upward and downward bends with changes of plane or skewed, T-junctions (flat, upward and downward, with changes of plane if necessary), intersections (flat or vertical, with changes of plane if necessary), and elements for reducing the cross-section of the channel (in width or height).

Overall, the configured accessory has a boxlike body, generally parallelepipedal, whose universal supporting structure includes a base plane (or a base frame comprising the base sides, to allow the configuration of the base face as well, as explained more fully below), acting as a bottom, and four angle supporting sections acting as lateral edges, connected stably to the base plane or frame, and the configuration elements of the accessory include (some of) the walls lying between (at least) the said lateral edges.

The accessory is assembled by means of the operations described below.

The first operation consists in assembling the supporting structure 10, in other words the base plane or frame 22 to the supporting sections 20 orthogonal thereto. The supporting structure is preferably created before the installation of the cable conduit on site, by the supplier for example, but it can also be created by the installer, being it a simple operation. It is simply necessary to fix each angle support section 20 in a stable way to the base plane or frame 22 by screwing the retaining screws 26 into their corresponding seats 56.

Even more preferably, the supplier provides a supporting structure complete with the top 40 or a complete preassembled accessory in a possible configuration, in order not to oblige the installer to bring together the various components of this structure.

The installer then partially dismantles the structure by separating the top from the supporting sections (by unscrewing the corresponding fixing screws for example), and then selects the panels 30-36 according to the desired configuration from a range which is as comprehensive as possible, to allow every possible kind of configuration of the cable conduit, and couples the panels to the angle supporting sections by inserting the edges into the guide channels formed in the supporting sections, thus forming the desired walls.

The insertion is carried out in a guided way, care being taken to ensure that the centring/locking projections 46 of each panel are fitted into the corresponding destination seats 60 provided in the seats 58 of the guide channels 54 of the angle supporting sections, so as to achieve a correct alignment of the panel in the (longitudinal) direction of insertion on each supporting section, while simultaneously preventing adjacent angle sections from spreading apart.

On completion of the insertion, each panel is locked in position by the corresponding quick-fit retaining devices (one for each edge), for example by force-fitting the bracket device 70 described above.

In the inserted state, the bracket retaining device penetrates the surfaces of the opposing faces of the panel and the juxtaposed walls of the guide channel by means of its spikes, thus forming an attachment gadget and preventing any accidental extraction of the panel. It also ensures the electrical continuity of the parts where metallic sections are used.

The retaining device is sufficiently firm to allow the accessory to be handled during configuration by the installer, who may grasp a wall of the accessory to assist him in the configuration of other sides or the insertion of cables, without any risk of pulling out the previously inserted panel.

On completion of the configuration of the four sides of the accessory, the installer joins it to the straight conduit or tray elements (or any reduction elements or other accessories) by means of the joining tabs 44 provided on the panels at the apertures 42, then lays the cables, and lastly carries out the final closing by screwing the top 40 on to the angle supporting sections. It is possible to provide for the interposition of sealing gaskets in the joints between the panels and closed conduit elements (indicated by C in Figures 6a and 6b) to ensure the tightness of the complete conduit with respect to the outside environment.

It should be noted that, when a conduit or tray element is joined to the accessory, the former does not penetrate into the cable housing space of the latter, but abuts the outer face of a wall panel, next to the profile of the aperture, thus avoiding any risk of damage to the cables placed in the accessory. The aperture profile is preferably trimmed along the cutting lines or coated, and is designed so as not to project into the terminal facing section of the conduit element, i.e. the area of the aperture and the conduit cross section are identical, in order not to scrape the cables.

Advantageously, this arrangement is easily reconfigurable according to the installation requirements (in case of changes or errors in the configuration, etc.). It is simply necessary to remove the top in order to allow access to the configuration panels forming the sides of the accessory, extract the retaining devices 70 by means of pliers or suitable tools, then remove the panel to be replaced and insert the replacement panel, taking care to reposition the retaining devices and replace any that have been damaged during extraction; finally the top is repositioned and refastened.

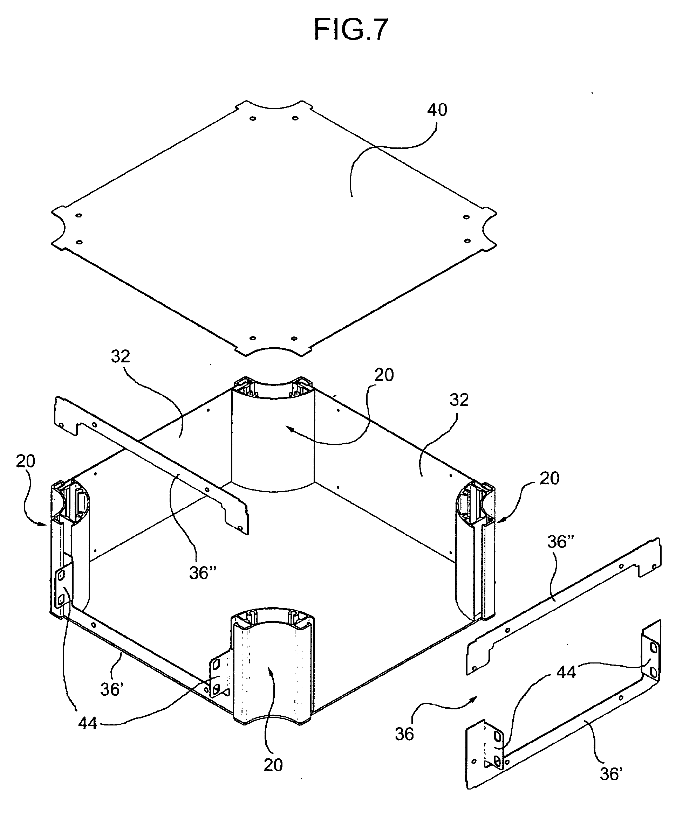

An alternative embodiment of a bend or junction accessory according to the invention is shown in Figure 7, which represents a flat accessory, particularly an accessory for forming a flat bend (although the following description is also applicable to a flat T-junction or intersection). In this embodiment, the panels with apertures (of the type indicated 36 in Figure 2d) are made in two separate parts (here correspondingly indicated 36' and 36"), produced for example by cutting the panel in the direction of the larger dimension of the aperture, so as to interrupt the continuity of the frame of the aperture in such a way as to allow access to the void of the aperture from one side only, instead of orthogonally to the plane in which it lies.

Advantageously, this allows the cables to be positioned through the apertures of the panels by laying from above (in the orientation shown in the figure), instead of by inserting through the cross section of the aperture, and thus optimizes the installation times for circuits where existing accessories have to be modified (for example, where a bend accessory has to be converted to a T-junction or to an intersection and therefore the cables have to be rerouted), since it is not necessary to completely extract the whole length of the cables.

In terms of operation, only the lower part of the panel 36' is initially inserted between the supporting sections 20, after which the cables are laid. The configuration of the wall is then completed by inserting the upper part 36" of the panel, after the cables have been laid, and the fitting of the retaining devices 70 ensures its stability.

The dividing line between parts 36' and 36" of the panel does not necessarily coincide with the mid-line of the aperture, but is preferably such that it is compatible with the integrity of the joining tabs 44 for coupling to straight conduit elements. For example, it could be a "broken" dividing line, in which one tab is integral with the lower part and the other is integral with the upper part of the panel.

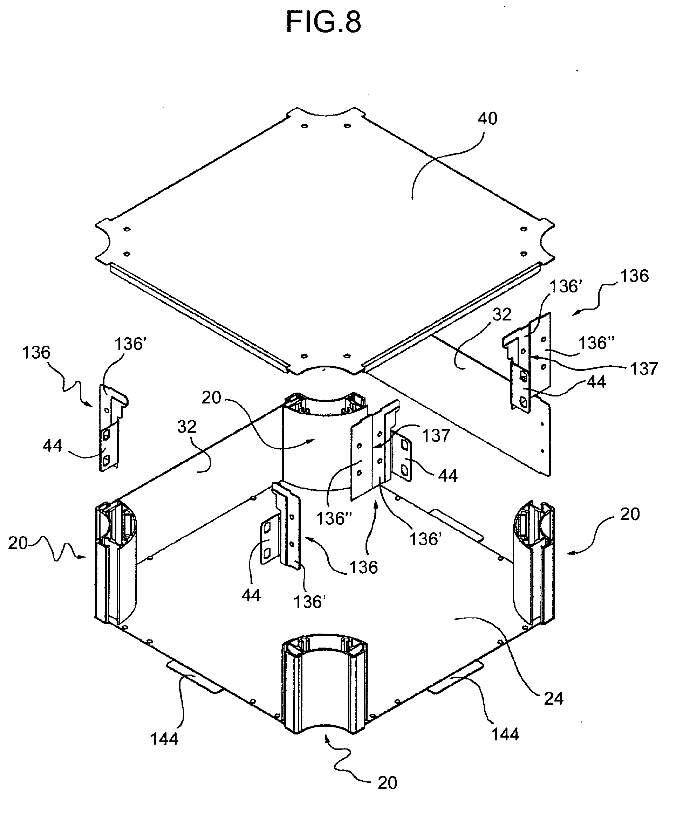

A further alternative embodiment of the panels forming the configurable walls of the accessory proposed by the invention is described with reference to Figure 8, which shows by way of example, in a similar manner to Figure 7, an accessory for forming a flat bend.

The panels with apertures functionally equivalent to the type indicated by 36 in Figure 2d are produced by replacing the frame of the aperture 42 with a pair of opposing flanges 136 at the short sides of the aperture 42, each carrying a corresponding joining tab 44 for coupling to straight conduit elements. In a similar way to the preceding solution, the present configuration allows access to the void of the aperture from one side only, instead of orthogonally to the plane in which it lies, and the positioning of the cables by laying from above (in the orientation shown in the figure), instead of by threading through the cross section of the aperture.

Advantageously, the flanges 136 consist of a plurality of contiguous configuration portions, of which the figure shows the inner portion 136' provided with the joining tabs 44 and an outer portion 136" , joined along pre-cut weakening lines 137 which enable them to be separated as required by the planned application. In their undivided state, the flanges 136 are designed to enable the aperture 42 to be reduced for coupling to conduits of smaller dimensions. One or more portions can be removed to widen the aperture 42, thus adapting the accessory to a conduit of larger dimensions.

The flanges 136 can also be retained in position by means of the retaining devices 70 (not shown) as described above.

Figure 8 shows a base plane 24 additionally provided with pre-cut fins 144 in the form of lugs (which can also be formed on the top 40 if necessary), projecting outside the accessory and acting as supporting elements for coupling of contiguous accessories, and removable rapidly and precisely with the aid of an ordinary tool (such as pliers).

It should be noted that the embodiment of the present invention proposed in the preceding discussion is purely exemplary and does not limit the present invention. A person skilled in the art can easily apply the present invention in different embodiments which do not depart from the principles described above, and which are therefore included in the present patent.

This is particularly applicable to the possibility of envisaging variant embodiments in which there are less than four configurable walls, or which, on the other hand, also comprise one or both of the base walls.

In the first case, the universal supporting structure can include a non-configurable fixed lateral wall, such as a side piece for wall fixing, which if necessary can be formed integrally with a base plane (the bottom plane 24 or the top 40) by bending a single sheet of metal into an L-shape. Of the four supporting sections described with reference to Figure 1, only two are preferably arcuate to allow the curving of the cables without risk of damage, while the others, against which the non-configurable lateral wall bears, do not form axes of curvature of the cables.

This accessory can be configurable alternatively as a bending accessory or as a T-junction accessory.

It would also be possible to imagine an accessory with only two configurable walls, but this would be of little practical use, owing to the limited number of possible configurable combinations. However, a special case which still falls within the scope of the present invention is described below.

In the second kind of possible embodiment, on the other hand, the accessory includes at least one base frame (at the top end for example) formed by a pair of further supporting sections or base sections, positioned orthogonally to the lateral supporting sections 20, and connected to each other and to the lateral sections by flanges which can be coupled by screw retaining devices.

This accessory can be configured alternatively as a bend, T-junction or intersection accessory in any plane, with or without a change of plane.

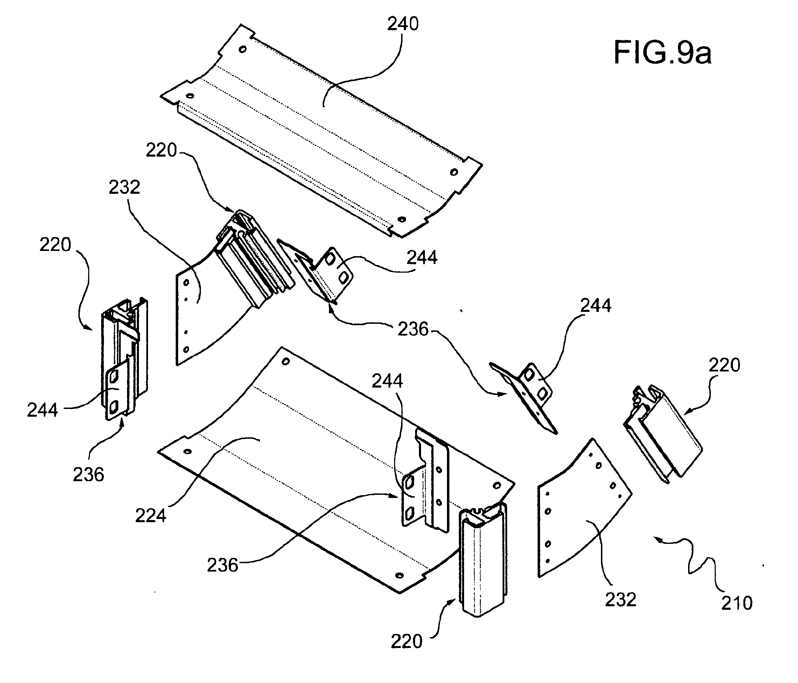

A special case of an accessory with two configurable walls is described with reference to Figures 9a-9e, which shows a bending accessory for upward or downward bends with configurable access points.

A universal supporting structure 210 includes perimetric supporting sections 220 in the form of angle uprights, interconnected by a curved blank bottom base panel 224, joined stably to the sections by means of screws or similar fasteners. The supporting sections 220 are in parallel pairs, and form two pairs of sections converging at an angle corresponding to the angle of bending of the accessory (for example, 30 or 45 degrees).

The configuration elements include lateral blank panels (with respect to the direction of laying of the cables), and panels with access apertures, which can be coupled to the supporting sections of the supporting structure to form the walls of the bend or junction accessory by a method similar to that described above. The lateral panels 232 are flat and arcuate at a predetermined angle matching the angle of the upward or downward bend of the accessory. A top blank base panel 240 is designed to be placed parallel to the bottom base panel and on the opposite end of the supporting sections from it, this top also being non-configurable and curved, in the same way as the bottom base plane 224, and adapted to be stably coupled to the supporting sections 220 by means of screws 26, elastically deformable snap-fitting clips or brackets, or similar fastenings.

In the illustrated embodiment, each panel with an aperture is made with a pair of opposing flanges 236 on the short sides of the aperture 242, each carrying a corresponding joining tab 244 for coupling to straight conduit elements C, but can consist of a complete frame, as are the panels indicated by 36 in Figure 2d.

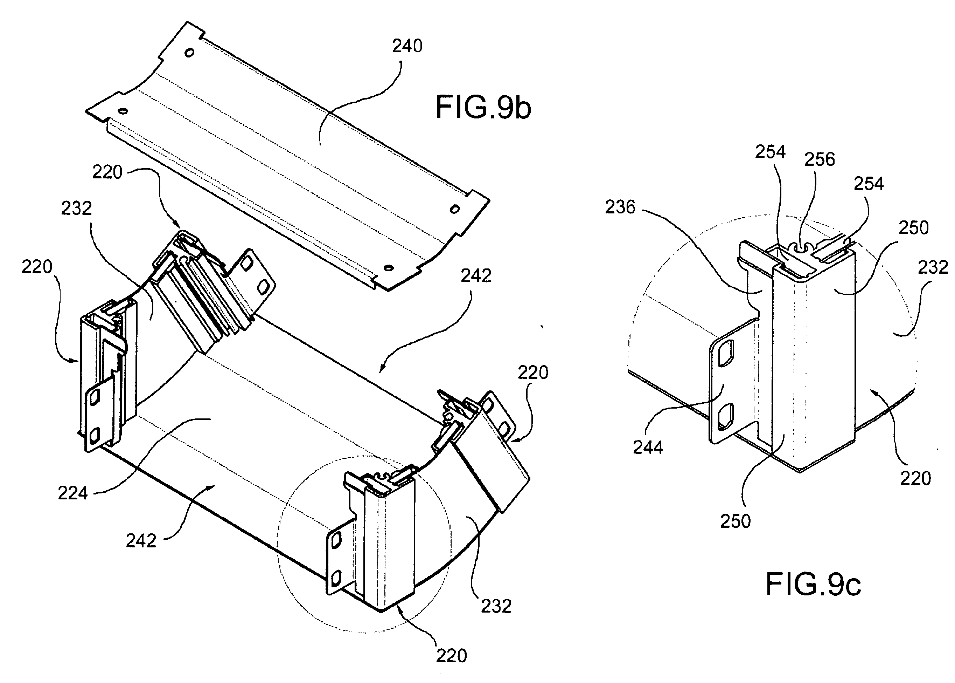

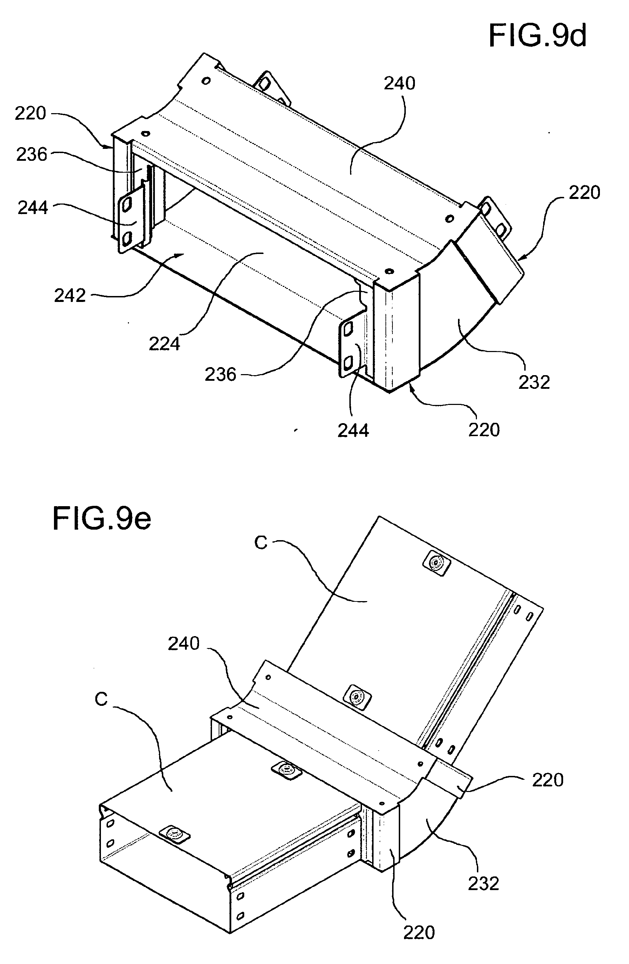

Figure 9a shows an exploded view of the accessory, Figure 9b shows a partially assembled view without the top, Figure 9c shows an enlarged view of a supporting section 220, Figure 9d shows an assembled view and Figure 9e shows an overall view of the accessory joined to two straight portions of a cable conduit C.

The characteristics disclosed in the description of the preceding embodiments are also found in the present embodiment, with the exception of the structure of the supporting sections, which no longer form axes of curvature of the cables and do not necessarily have to have a convex surface inside the accessory.

The supporting sections 220 are shaped in the form of a right-angle dihedral and are positioned in the supporting structure with their corners facing towards the outside of the accessory. Each is formed by two orthogonal walls 250 which delimit corresponding longitudinal guide formations 254, made in the form of channels open in orthogonal directions and capable of receiving, in a removable way, the edges of the panels which form the walls of the accessory in the assembled condition. One or more seats 256 are provided for the fastening screws of the base panel and of the top, within the formations 254.

The blank lateral panels 232 to be assembled to the supporting structure, and the bottom base panel 224 and top panel 240, are chosen according to the bend topology (upward, downward, angle of bend) specified for the accessory.

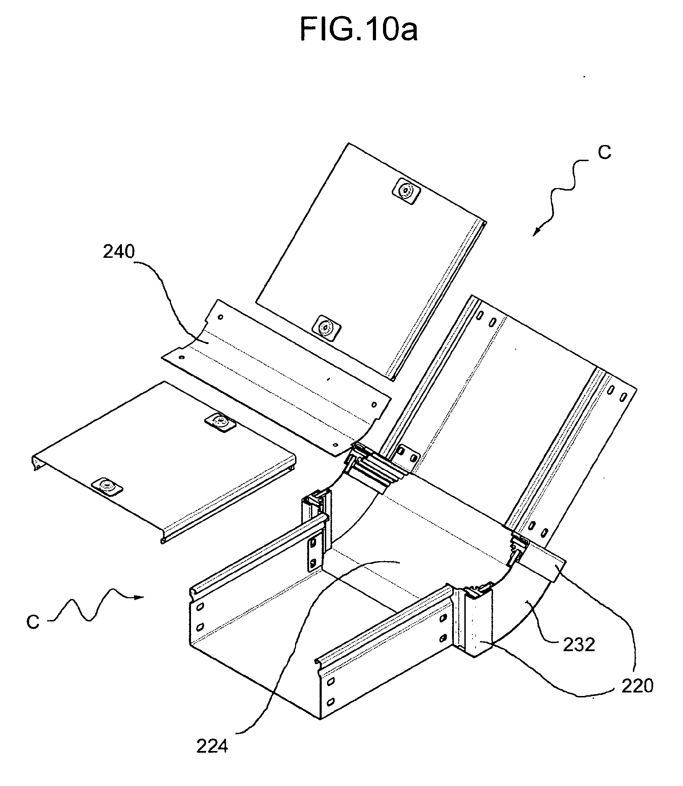

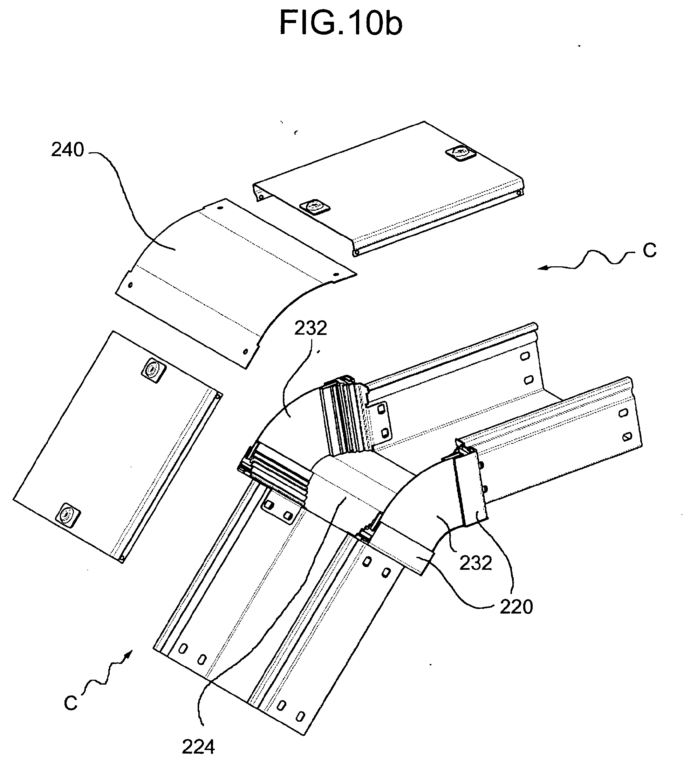

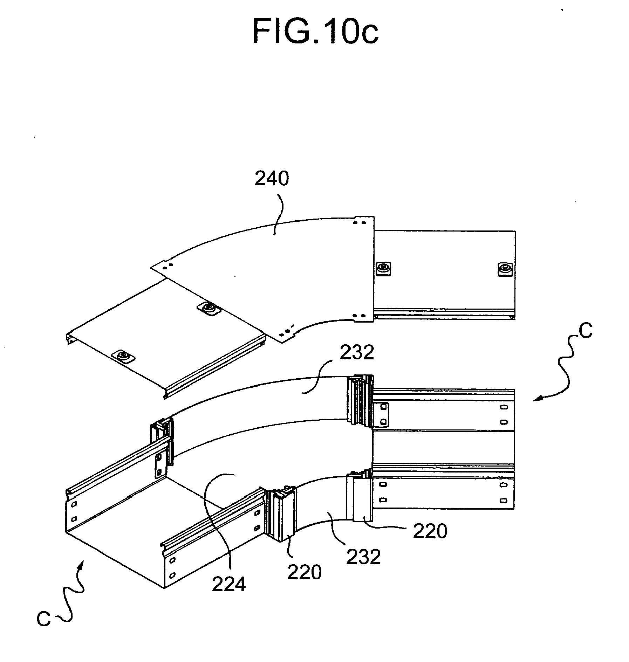

Figures 10a, 10b and 10c show the configurations of an upward, downward and flat bend accessory respectively.

In the case of a flat bend accessory (Figure 10c), the blank bottom base panels 224 and top panels 240 are flat and arcuate at a specified angle corresponding to the bend angle of the accessory, and a pair of curved lateral blank panels 232 is provided.

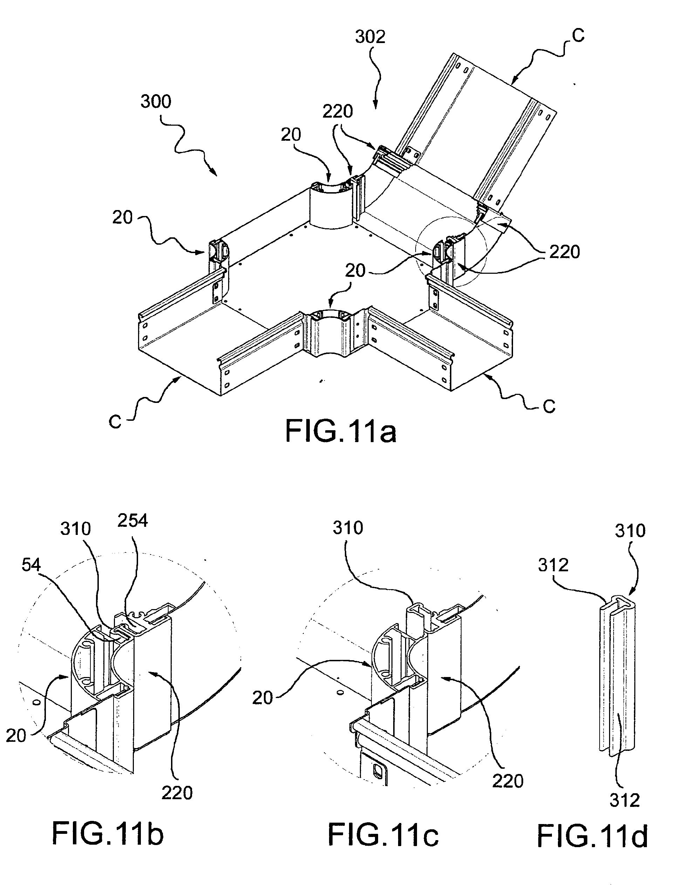

Figure 11a shows a portion of cable conduit which can be formed by joining a flat T-junction accessory 300 to an upward bend accessory 302 of the type shown in Figures 9a-9e. In the absence of straight conduit portions between the two accessories, the latter are joined at a common configurable wall. In place of an appropriate panel with an aperture, such as the panel indicated by 36 in Figure 2d or the flanges indicated by 236 in Figures 9b and 9d, the common aperture between the T-junction accessory 300 and the bend accessory 302 is formed by the direct connection of the two accessories, which can be produced by coupling the corresponding supporting sections 20 and 220.

The two sections 20 and 220 are coupled by means of an intermediate junction element 310, for example in the form of a C-section shown in Figure 11d, which can be inserted, as shown more fully in the enlargements in Figures 11b and 11c, at one end into the free seat 54 of the supporting section 20 of the T-junction accessory 300, and at the other end into the free seat 254 of the supporting section 220 of the bend accessory 302.

The stability of the coupling is ensured by the provision of a junction element 310 with slightly converging walls 312 which can be spread apart elastically, which can be inserted by force into the seats 54, 254, thus clamping the parts. The embodiment of the junction element 310 which is illustrated is purely an example, and the element can be made in other shapes and sizes provided that it has the same functional characteristics, for example as a steel spring element with an extension substantially smaller than that of the supporting sections.

The components of the structure are supported in the direction orthogonal to the direction of coupling of the contiguous accessories by means of the fin 144 (Figure 8) of one of the two accessories, which extend below the adjacent accessory and thus help to retain it in the vertical direction, preventing it from slipping out of the first accessory by gravity (on the other hand, the straight conduit elements are supported by the joining tabs 44). The fins 144 also contribute to ensuring the IP rating of the conduit.

This solution for a connection between sections can also be used wherever any two accessories according to the invention, which can be coupled by means of their supporting sections, are to be joined directly by means of a common wall. This kind of juxtaposed configuration of accessories is advantageous, for example, if it is desired to exchange cables between two different conduits without creating intersections which house a large number of cables or long connecting branches between conduits with the laying of long straight portions. It is also advantageous because it permits the forming of bends at an angle which is a multiple of a minimum configurable angle (for example, 90 degree bends produced by a sequence of 45 or 30 degree bend accessories (modules)), thus avoiding the provision of a larger number of separate accessories, or S bends which can be produced by a sequence of two accessories with opposite bends.

Clearly, provided that the principle of the invention is retained, the forms of embodiment and the details of production can be varied considerably from what has been described and illustrated purely by way of example and without restrictive intent, without departure from the scope of protection of the present invention as defined by the attached claims.

## Claims

1. Bend or junction accessory for cable conduits, comprising a boxlike body including a pair of opposing base walls and a plurality of lateral walls, which combine to form a housing for electrical cables, and having a plurality of access points arranged for connection to other elements of a cable carrying system,
**characterized in that** it comprises:
- a supporting structure (10) common to a plurality of possible accessory configurations; and
- a plurality of removable wall configuration elements (12) adapted to be assembled with said common supporting structure (10), the said configuration elements (12) being selectable according to the intended use of the accessory.

2. Accessory according to Claim 1, in which the said supporting structure (10) includes a plurality of lateral supporting sections (20) adapted to be coupled stably in advance to a bottom base assembly (22).

3. Accessory according to Claim 2, in which the bottom base assembly (22) includes a base plane (24) comprising a blank panel.

4. Accessory according to Claim 2, in which the bottom base assembly (22) includes a base frame comprising at least one pair of base supporting sections, positioned orthogonally to the said lateral supporting sections (20).

5. Accessory according to any one of Claims 2 to 4, in which the said wall configuration elements (12) comprise base wall panels (24, 40) and lateral wall panels (30-36), the base walls including a bottom wall and a top wall.

6. Accessory according to Claim 5, in which the said configuration elements (12) include blank wall panels (30, 32) and wall panels with apertures (34, 36) adapted to be coupled in a guided way to the supporting sections (20) of the supporting structure (10) to form the walls of the accessory.

7. Accessory according to Claim 2, comprising a top base assembly, adapted to be coupled stably to the said supporting sections (20) at the opposite end from the bottom base assembly (22).

8. Accessory according to Claim 7, in which the said top base assembly includes a base plane (40) comprising a blank panel.

9. Accessory according to Claim 7, in which the said top base assembly includes a base frame comprising at least one pair of base supporting sections, positioned orthogonally to the said lateral supporting sections (20).

10. Accessory according to Claims 3 and 8, in which the said bottom base plane (224) and the said top base plane (240) are curved panels.

11. Accessory according to Claim 5, comprising lateral arcuate wall panels (232) curved at a specified angle corresponding to the upward or downward bend angle that can be formed by the accessory.

12. Accessory according to Claim 6, in which each of the said panels (30-36) has a perimetric profile shaped so as to close the gap between two adjacent supporting sections (20), lying flush with the bottom base assembly (22) and a top base assembly in the assembled state of the accessory.

13. Accessory according to Claim 6, in which the panels with apertures (34, 36) are provided with apertures (42) of generally rectangular shape, with dimensions matching those of the conduit cross section of the cable carrying system (C) for which the accessory is intended.

14. Accessory according to Claim 13, in which the said apertures (42) are positioned with their sides parallel to the sides of the panel (34, 36).

15. Accessory according to Claim 13, in which the said apertures (42) are positioned with their sides inclined with respect to the sides of the panel (34, 36).

16. Accessory according to any one of Claims 13 to 15, in which the said panels with apertures (34, 36) have, on a pair of opposite sides of the apertures (42), orthogonal joining tabs (44) for coupling to a straight cable conduit or tray element (C), the said element being adapted to abut the outer face of the panel (34, 36).

17. Accessory according to any one of Claims 13 to 16, in which a panel with an aperture (34, 36) is provided with an aperture (42) divided by at least one partition for separating the cables, for coupling to cable conduits provided with separator elements for arranging the cables in separate compartments.

18. Accessory according to Claim 16 or 17, comprising sealing gaskets adapted to be interposed between a panel with apertures (34, 36) and a closed conduit element (C) abutting its outer face.

19. Accessory according to Claim 16, in which a panel with apertures (36) is made in two parts (36', 36") separated in the direction of the larger dimension of the aperture (42).

20. Accessory according to Claim 19, in which the said separate parts of the panel (36', 36") include complete joining tabs (44) for coupling to straight conduit elements (C).

21. Accessory according to Claim 16, in which each of the said panels with apertures comprises a pair of opposing flanges (136) on the short sides of the aperture (42), each flange (136) including at least a first configuration portion (136') carrying the said orthogonal joining tabs (244) and any necessary further contiguous configuration portions (136") joined along weakening lines (137) for separating them according to the size of the configuration.

22. Accessory according to Claim 6 or 12, in which the said panels (30-36) are provided with centring/locking projections (46) on at least one face.

23. Accessory according to Claim 6, in which a supporting section (20) is made arcuate about its longitudinal axis, and positioned in the supporting structure (10) with its convexity facing the inside of the accessory.

24. Accessory according to Claim 23, in which a supporting section (20) is made in the form of a hollow structure having the shape of a sector of a cylindrical ring with a centre angle of 90°.

25. Accessory according to Claim 24, in which a supporting section (20) comprises a first inner longitudinal wall (50') and a second outer longitudinal wall (50"), which have, along their longitudinal edges, a pair of flanges (52', 52") bent at a right angle to the meridian plane, and are joined together in an interlocking arrangement, in which the flanges (52', 52") of corresponding edges are positioned facing each other so as to form between them corresponding longitudinal guides (54), which are open on the said outer wall (50") along meridian lines of the structure and each of which is adapted to receive, in a removable way, one edge of a corresponding panel (30-36).

26. Accessory according to Claim 6, in which a supporting section (20) is shaped in the form of a right-angle dihedral and positioned in the supporting structure with its corner facing the outside of the accessory, and comprises two orthogonal walls (250) which form corresponding guide channels (254) open in orthogonal directions and each adapted to receive an edge of a corresponding panel (232, 256).

27. Accessory according to Claim 25 or 26, in which one wall (50', 50"; 256, 250) of the section (20; 220) comprises integral seats (56; 256) for receiving and retaining the said fastenings (26) of a base unit (22; 224, 240).

28. Accessory according to Claim 27, in which the said seats (56; 256) are tubular formations extending longitudinally and acting as stiffening ribs for the structure of the section (20; 220).

29. Accessory according to Claim 25, in which a guide (54) comprises a shaped longitudinal seat (58), in which is formed a longitudinal recess (60), or a plurality of recesses aligned in the longitudinal direction, for receiving, in the assembled state, centring/locking projections (46) formed on the panels (30-36).

30. Accessory according to Claim 29, in which gaskets are interposed in the seats (58) of the said guides to ensure the tightness of the configured accessory with respect to the outside environment.

31. Accessory according to Claim 25 or 26, comprising a junction element (310) between juxtaposed supporting sections (20; 220), in the form of a C-section which can be inserted into corresponding guide formations (54; 254) of the supporting sections.

32. Accessory according to Claim 2, in which the said supporting sections (20) are made from plastics material by injection moulding or extrusion.

33. Accessory according to Claim 2, in which the said supporting sections (20) are made from metallic material.

34. Accessory according to Claim 29, comprising quick-fit retaining devices (70) for preventing the said panels (30-36) from slipping in the guide seats (58), the said devices (70) having interference means which can engage respectively with the faces of the panels (30-36) and with the walls of the guide seat (58).

35. Accessory according to Claim 34, in which the said retaining devices (70) are shaped in the form of brackets and adapted to be positioned astride an upper edge of a corresponding panel housed in the guide seat (58), and in which the said interference means comprise a plurality of spikes (74a, 74b), namely first spikes (74a) for penetrating the opposing surfaces of the panel (30-36) and second spikes (74b) for penetrating the inner surfaces of the guide seat (58).

36. Accessory according to any one of the preceding claims, in which the common supporting structure (10) includes a non-configurable lateral wall.

37. Accessory according to Claim 36, in which the said non-configurable lateral wall is made in one piece with a base plane (24) by bending a single sheet of metal into an L-shape.

38. Accessory according to any one of the preceding claims, in which the said accessory is adapted to have one of the following possible configurations: flat bend; upward or downward bend; S-bend; bend with change of plane; flat T-junction; upward or downward T-junction; T-junction with change of plane; flat intersection; vertical intersection; intersection with change of plane; and element for reducing the conduit section.

39. Kit for a configurable bend or junction accessory for cable conduits, comprising:
- a first base assembly (22) and a plurality of lateral supporting sections (20) adapted to be associated in advance with the said base assembly (22) to form a supporting structure (10) of the accessory,
the said base assembly (22) comprising one of: a bottom base plane (24) and a bottom base frame comprising at least one pair of base supporting sections, adapted to be positioned orthogonally to the lateral supporting sections (20) in the assembled state;
- a plurality of removable wall configuration elements (12), adapted to be assembled to the said supporting structure (10) by guided coupling to the said supporting sections, these elements being selectable according to the intended use of the accessory and including lateral wall panels (30-36) and base wall panels (24, 40),
the said panels including blank panels (30, 32, 24, 40) and panels with apertures (34, 36); and
- a second base assembly, adapted to be associated with the said plurality of lateral support sections (20) on the end opposite the first base assembly (22), the said second base assembly comprising one of: a top base plane (40) and a top base frame comprising at least one pair of base supporting sections, adapted to be positioned orthogonally to the lateral supporting sections (20) in the assembled state.
